# EUROPEAN PATENT APPLICATION

(11) **EP 3 907 871 A1**
(43) Date of publication of application: **10.11.2021**
(21) Application number: 20172881.3
(22) Date of filing: 05.05.2020
(51) Int. Cl.: H02M 1/38, H02M 3/335, H02M 1/00

(54) **RESONANT HALF-BRIDGE CONVERTER WITH ADAPTIVE DEAD-TIME**

(71) Applicant: Tridonic GmbH & Co. KG, 6851 Dornbirn (AT)
(72) Inventor: Stark, Stefan, 6850 Dornbirn (AT); Kucera, Clemens, 6850 Dornbirn (AT); Netzer, Harald, 6850 Dornbirn (AT)
(74) Representative: Rupp, Christian

(57) **Abstract**

A converter (1) for supplying a load (4) is provided. The converter (1) comprises a half bridge (6). The converter (1) moreover comprises a capacitive current compensation circuit (10), which is configured to adjust a dead time of the half bridge (6), in order to prevent capacitive current. The capacitive current compensation circuit (10) moreover comprises a capacitive current compensation activation circuit (13), configured to selectively activate and deactivate the adjusting of the dead time of the half bridge (6), based on an operation state of the converter (1) and/or a statistical analysis of an occurrence of capacitive current events.

## Description

The present invention relates to resonant converters, especially LLC converters for supplying an LED load.

It is known that a switch of the half bridge of a converter is only switched on after the midpoint voltage, which is the voltage between two switching transistors of the half bridge, has reached the new voltage level. In order to do so, the midpoint voltage is sensed and the dead time, the time during which both transistors are switched off, is prolonged until the midpoint voltage has reached the new level.

This solution is disadvantageous since the increase of the dead time does not consequently occur in every switching cycle, leading to fluctuations of the power transmitted to the load, resulting in a visible flicker of the LED output.

For example, the document WO 2019/238879 A1 shows a converter with a half bridge.

Accordingly, the object of the invention is to provide a converter and a method for operating a converter, which allow for a stable output power independent of operating state.

The object is solved by the features of the independent claims. Additional features of the invention are provided in the dependent claims. In the following, parts of the description and drawings referring to embodiments, which are not covered by the claims are not presented as embodiments of the invention, but as examples useful for understanding the invention.

According to a first aspect of the invention, a converter for supplying a load is provided. The converter comprises a half bridge. The converter moreover comprises a capacitive current compensation circuit, which is configured to adjust a dead time of the half bridge, in order to prevent capacitive current. The capacitive current compensation circuit moreover comprises a capacitive current compensation activation circuit, configured to selectively activate and deactivate the adjusting of the dead time of the half bridge, based on an operation state of the converter and/or a statistical analysis of an occurrence of capacitive current events. This allows for a use of the capacitive current compensation only when it is absolutely necessary, resulting in a reduced flicker during most operating states of the converter.

Advantageously, the capacitive current compensation activation circuit comprises a state determining circuit, configured to determine the operating state of the converter. This allows for determining a plurality of different operating states and reacting thereupon.

Preferably, the state determining circuit is configured to determine a steady state operation state, if an output power of the converter has changed by less than a power change threshold value for at least a steady state time period. Moreover, the state determining circuit is advantageously configured to determine a load change operation state, if the output power of the converter has changed by more than the power change threshold value within the steady state time period. This allows for differentiating between a constant operation and a changing power level.

Preferably, the capacitive current compensation activation circuit is configured to deactivate the adjusting of the dead time of the half bridge, if the state determining circuit has determined a steady state operation state, and to activate the adjusting of the dead time of the half bridge, if the state determining circuit has determined a load change operation state. This allows for reducing the flicker during steady state operation, while preventing capacitive current during the capacitive current prone load change operation state.

Preferably, the state determining circuit is moreover configured to determine a high power operation state, if the output power of the converter is above a power state threshold value and/or a low power operation state, if the output power of the converter is below a power state threshold value, as the operating state of the converter. This allows for differentiating between a high power operation and a low power operation of the converter.

Advantageously, the capacitive current compensation activation circuit is configured to deactivate the adjusting of the dead time of the half bridge, if the state determining circuit has determined a low power operation state, and to activate the adjusting of the dead time of the half bridge, if the state determining circuit has determined a high power operation state. This allows for significantly reducing flicker during a low power operation state, while preventing capacitive current during a high power operation state.

Advantageously, the capacitive current compensation activation circuit moreover comprises an event analyzer, which is configured to perform the statistical analysis of an occurrence of capacitive current events. This allows for a very efficient statistical analysis.

Advantageously, the event analyzer is configured to determine if the occurrence of capacitive current events is statistically significant, or if it is not statistically significant. This allows for very effectively deciding if the capacitive current compensation should be used or not.

Advantageously, the event analyzer is configured to determine the occurrence of capacitive current events as statistically significant, if a capacitive current event is determined in at least L consecutive switching periods of the half bridge and/or if a capacitive current event is determined in at least 1/M of N switching periods of the half bridge. Additionally or alternatively, the event analyzer is configured to determine the occurrence of capacitive current events as non-statistically significant, if a capacitive current event is determined in less than L consecutive switching periods of the half bridge, and/or if a capacitive current event is determined in less than 1/M of N switching periods of the half bridge. This allows for a very simple to compute statistical analysis.

Advantageously, the capacitive current compensation activation circuit is configured to activate the adjusting of the dead time of the half bridge, if the event analyzer has determined the occurrence of capacitive current events as statistically significant, and to deactivate the adjusting of the dead time of the half bridge, if the event analyzer has determined the occurrence of capacitive current events as non-statistically significant. This allows for a very simple determination if to switch on or off the capacitive current compensation.

Advantageously, the capacitive current compensation circuit is configured to adjust the dead time of the half bridge by selectively switching the dead time between a base value and a fixed increased value, or dynamically adjusting the dead time based on the occurrence of capacitive current events. This allows for either a very simple computation or alternatively, for a very accurate determining of the ideal dead time.

Preferably, the capacitive current compensation circuit comprises a capacitive current determining circuit, which is configured to determine capacitive current events as switching cycles of the half bridge, in which a capacitive current occurs in the half bridge. This allows for a very simple determining of capacitive current events.

Preferably, the half bridge comprises a first switching transistor and a second switching transistor. The capacitive current determining circuit is configured to determine capacitive current events as switching cycles of the half bridge, in which a capacitive current through at least one of the first switching transistor and the second switching transistor occurs. A capacitive current is therein a current flowing through one of the first switching transistor and the second switching transistor, while a body diode of the other of the first switching transistor and the second switching transistor is conducting. This allows for a very accurate determining of a capacitive current event.

Preferably, the capacitive current determination circuit comprises a midpoint voltage measuring circuit, which is configured to measure a voltage at a midpoint between the first switching transistor and the second switching transistor. The capacitive current determination circuit is then configured to determine the occurrence of a capacitive current event based on the midpoint voltage measured by the midpoint voltage measuring circuit. This allows for a very simple determining of the capacitive current event.

Further advantageously, the dead time of the half bridge is a time between switching the first switching transistor and switching the second switching transistor, during which both the first switching transistor and the second switching transistor are switched off.

According to a second aspect of the invention, a method for operating a converter for supplying a load is provided. The method comprises determining an operation state of the converter, and/or determining capacitive current events and performing a statistical analysis of an occurrence of capacitive current events. Moreover, the method comprises selectively activating or deactivating an adjusting of a dead time of the half bridge, to prevent capacitive current, based on the operating state of the converter, and/or the statistical analysis of an occurrence of capacitive current events. This allows for reducing the flicker for most operating states of the converter.

An exemplary embodiment of the invention is now further explained with respect to the drawings, in which:
- Fig. 1: shows a first embodiment of the inventive converter in a block diagram;
- Fig. 2: shows a second embodiment of the inventive converter in a detailed block diagram;
- Fig. 3: shows a third embodiment of the inventive converter in a circuit diagram;
- Fig. 4: shows signals in a fourth embodiment of the inventive converter;
- Fig. 5: shows further signals in a fifth embodiment of the inventive converter; and
- Fig. 6: shows an embodiment of the inventive method in a flow diagram.

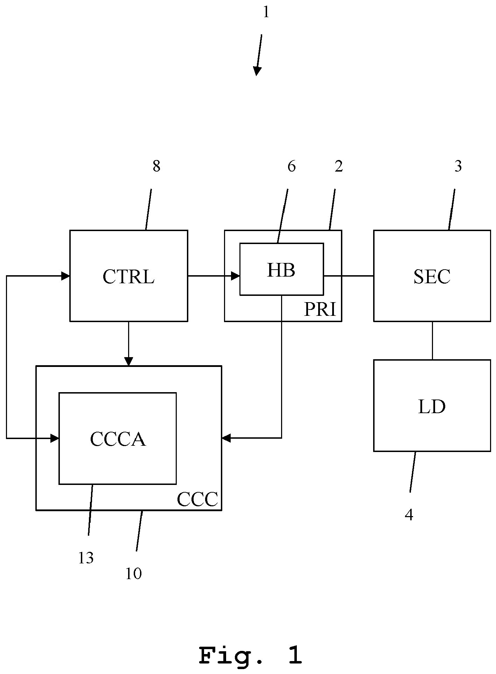

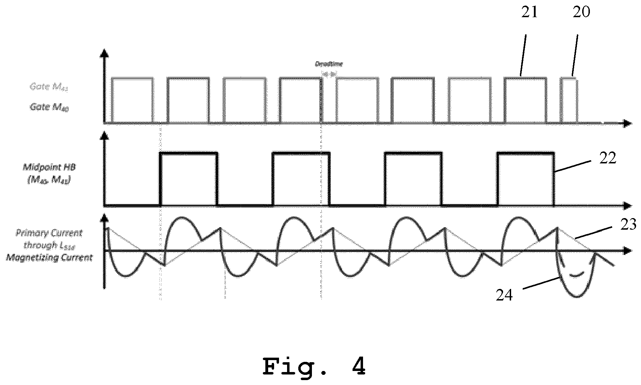

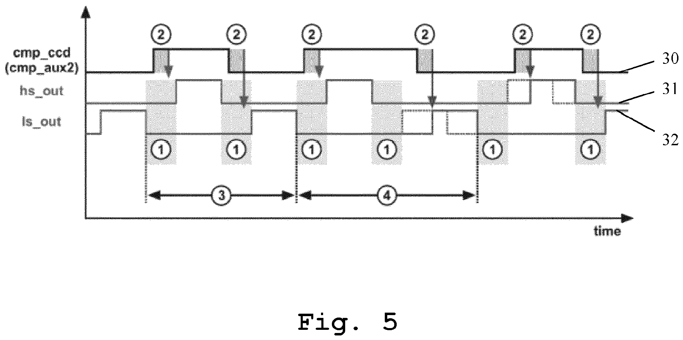

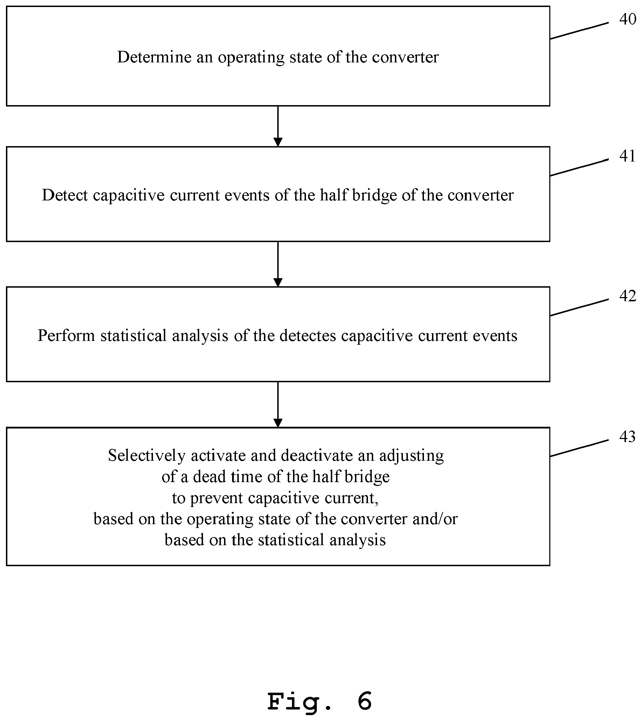

First, we demonstrate the general construction and function of embodiments of the inventive converter along Fig. 1 - 3. Along Fig. 4 and 5, the function is explained in greater detail with regard to a number of different signals within inventive converters. Finally, with regard to Fig. 6, an embodiment of the inventive method is explained in detail. Similar entities and reference numbers in different figures have been partially omitted.

In Fig. 1, a first embodiment of the inventive converter 1 is shown in a block diagram. The inventive converter 1 comprises a primary converter side 2 coupled to a secondary converter side 3 by an inductive coupler, not depicted here. The primary converter side 2 comprises a half bridge 6.

The converter 1 moreover comprises a controller 8, which is connected to the primary converter side 2, especially to the half bridge 6.

The secondary converter side 3 is connectable to a load 4, for example a light emitting diode (LED), or a plurality of LEDs.

So far, the circuit corresponds to a regular half bridge converter. In operation, the controller 8 controls the alternate switching of switching transistors of the half bridge 6. During this alternate switching, both transistors are deactivated during a dead time. The switching occurs at a switching frequency. For modulating the power amount transferred from the primary converter side 2 to the secondary converter side 3, the switching is additionally modulated using pulse width modulation with a pulse width modulation frequency, which is lower than the switching frequency.

The inventive converter 1 moreover comprises a capacitive current compensation circuit 10 connected to the controller and/or to the primary converter side 2. The capacitive current compensation circuit 10 moreover comprises a capacitive current compensation activation circuit 13.

The capacitive current compensation circuit 10 adjusts a dead time of the half bridge 6, to prevent capacitive current within the half bridge 6. The capacitive current compensation activation circuit 13 selectively activates and deactivates the adjustment of the dead time of the half bridge 6 by the capacitive current compensation circuit 10. This is done based on an operating state of the converter, and/or a statistical analysis of an occurrence of capacitive current events.

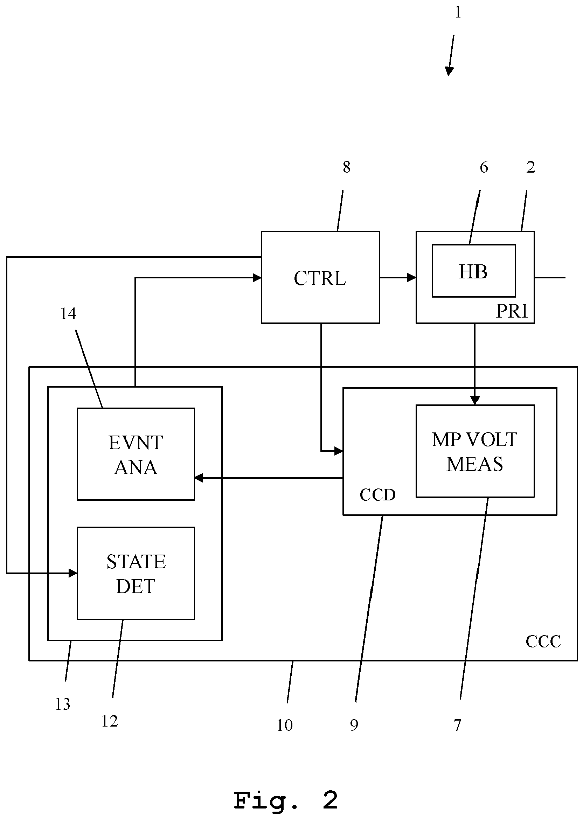

In Fig. 2, a more detailed block diagram of an embodiment of the inventive converter 1 is shown. Here, the inner workings of the capacitive current compensation circuit 10, and especially the capacitive current compensation activation circuit 13 are shown.

The capacitive current compensation circuit 10 comprises a capacitive current determining circuit 9, which in turn comprises a midpoint voltage measuring circuit 7, which is connected to the midpoint between the switching transistors of the half bridge 6 of the primary converter side 2. The capacitive current determining circuit 9 is connected to the controller 8.

Moreover, the capacitive current compensation activation circuit 13 comprises a state determining circuit 12, which is connected to the controller 8. Also, the current compensation activation circuit 13 comprises an event analyzer 14, connected to the capacitive current compensation circuit 10 and the controller 8.

In operation, the midpoint voltage measuring circuit 7 measures a voltage at the midpoint between the switching transistors of the half bridge 6 of the primary converter side 2. The capacitive current determining circuit 9 determines capacitive current events based upon the measured midpoint voltage and/or based upon a current switching state of the switching transistors of the half bridge 6 of the primary converter side 2, provided by the controller 8. A capacitive current event is therein defined as a switching cycle of the half bridge, in which during the activation of one of the switching transistors, the midpoint voltage has not yet reached the new switching state, resulting in the body diode of the respective other of the switching transistors being conductive.

These capacitive current events are handed to the event analyzer 14. The event analyzer 14 determines if capacitive current events are statistically significant. This is done, for example, by determining in how many consecutive switching cycles of the half bridge 6, a capacitive current event occurs. As soon as L consecutive capacitive current events occur, this is considered as statistically significant.

Additionally or alternatively, as soon as 1/M of N switching cycles show a capacitive current event, a statistical significance is assumed. If this is not the case, the capacitive current event is considered as not statistically significant. The capacitive current compensation activation circuit 13 activates the capacitive current compensation when the event analyzer 14 has determined a statistical significance of the analyzed capacitive current events. It then increases the dead time between switching the switching transistors of the half bridge 6 of the primary converter side 2. It can either switch from a base dead time to a fixed increased dead time, or dynamically adjust the dead time until no longer statistically significant capacitive current events occur.

Moreover, during the operation of the converter 1, the state determining circuit 12 determines operation states of the converter 1. In order to do so, it receives information from the controller 8.

Especially, the state determining circuit 12 determines if the converter 1 is in a steady state operation state or a load change operation state. This is done by determining if the output power of the converter has changed by more than a power change threshold value within a steady state time period. If the steady state determining circuit 12 determines a steady state operation state, the capacitive current compensation activation circuit 13 deactivates the capacitive current compensation, since during steady state operation state, it is generally assumed that the circuit design prevents capacitive current from happening, which results in all detected capacitive current events being assumed erroneous, for example, due to measuring noise.

Moreover, the state determining circuit 12 advantageously determines a high power operating state or a low power operating state of the converter 1 based upon a current operating power of the converter 1, provided by the controller 8. Especially, the state determining circuit 12 compares the current operating power of the converter 1 to an operating power threshold. If the current operating power is above the operating power threshold, a high power operation state is assumed, while a low power operation state is assumed, if it is below the operating power threshold. In case of a low power operating state, the capacitive current compensation activation circuit 13 deactivates the capacitive current compensation, since in this case, due to the low thermal stress on the converter 1, a certain degree of capacitive current can be tolerated. In this case, a flicker of the output signal can therefore be prevented by deactivating the capacitive current compensation.

It is important to note that the different mechanisms, by which the capacitive current compensation activation circuit 13 judges if the capacitive current compensation should be activated or deactivated, can each be employed separately, or together. In case of these different measures being employed jointly, the capacitive current compensation activation circuit 13 advantageously deactivates the capacitive current compensation, as soon as any one of the statistical analysis by the event analyzer 14, or the power level analysis by the state determining circuit 12, or the steady state evaluation by the state determining circuit 12 results in a deactivation of the capacitive current compensation. Only if all of the employed indicators require a use of a capacitive current compensation, the capacitive current compensation activation circuit 13 activates the capacitive current compensation and instructs the controller 8 to respectively increase the dead time between the switching of the switching transistors of the half bridge 6 of the primary converter side 2.

To achieve this goal, the capacitive current compensation activation circuit 13 may additionally comprise a data aggregator circuit, which is not displayed here. The data aggregator circuit is then connected to the event analyzer 14 as well as to the state determining circuit 12. The data aggregator circuit combines the signals using an OR-conjunction. As soon as one of the signals suggests a deactivation of the capacitive current compensation, the data aggregator hands on a deactivation signal to the controller 8. If all of the indicators indicate an activation of the capacitive current compensation, the data aggregator hands on an activation signal to the controller 8, activating the capacitive current compensation.

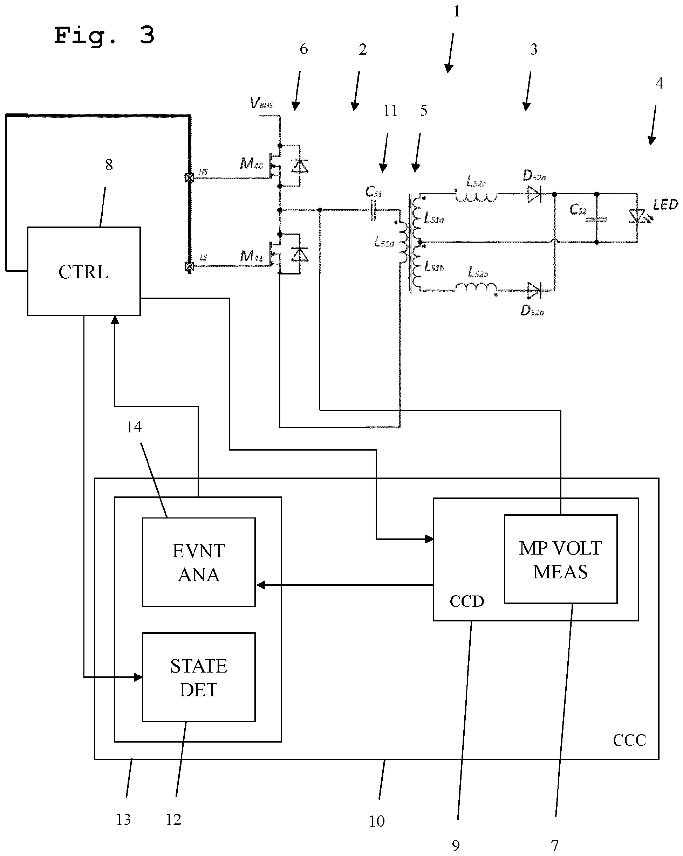

In Fig. 3, a third embodiment of the inventive converter 1 is shown in a circuit diagram. Here, additionally, circuit details of the primary converter side 2 and the secondary converter side 3 are shown.

The primary converter side 2 comprises a half bridge 6, which is comprised by a series connection of a first switching transistor M₄₀ and a second switching transistor M₄₁. The half bridge 6 is connected between a bus voltage V_{Bus} which may be supplied as DC voltage for instance from a power factor correction circuit and ground. Each of the switching transistors M₄₀, M₄₁ comprise a body diode. The controller 8 is connected to the control terminals of the switching transistors M₄₀, M₄₁.

A midpoint between the switching transistors M₄₀, M₄₁ is connected to a resonator 11, which is here comprised of a resonant capacitance Csi and a series connected inductance L_{51d}, which is also part of the inductive coupler 5.

The midpoint is moreover connected to the midpoint voltage measuring circuit 7.

The secondary converter side 3 is formed by inductivities L₅₁ₐ, L_{51b}, which are series-connected and are also part of the inductive coupler 5. The inductance L₅₁ₐ is connected to a further inductance L_{51c}, which in turn is connected to a diode D₅₂ₐ. The inductance L_{51b} is moreover connected to a further inductance L_{52b}, which in turn is connected to a diode D_{52b}. The diodes D₅₂ₐ and D_{52b} are connected to each other with their respective terminals opposite the inductances L_{52c}, L_{52b}. The midpoint between the inductances L₅₁ₐ and L_{51b} as well as the connection point of the two diodes D₅₂ₐ and D_{52b} are connected to a smoothing capacitance C₅₂. This is also the connection point for the load 4 (for e.g. an LED).

In Fig. 4, a number of signals in a further embodiment of the inventive converter are shown. Reference number 20 shows the control terminal of the switching transistor M₄₁, while reference number 21 shows the voltage at the control terminal of the switching transistor M₄₀. The dead time is indicated as the time distance during which none of the control terminals is activated.

The reference number 22 shows the midpoint voltage between the switching transistors M₄₀, M₄₁.

The reference number 23 shows a current through the inductance L_{51d} on the primary converter side 2. The reference number 24 shows a magnetizing current.

It can readily be seen that the resonator current provides the energy to let the middle point swing from ground voltage to Vbus voltage over the body diode of the HighSide switching transistor. The sensed midpoint voltage increases until the divided bus voltage is reached.

Moreover, in Fig. 5, further signals in a third embodiment of the inventive converter are shown. Reference number 30 shows a capacitive current detection signal, based upon the midpoint voltage. The reference number 31 shows an output signal of the switching transistor M₄₀, while reference number 32 shows an output of the switching transistor M₄₁. A circled 1 indicates dead times, while a circled 2 indicates filter times of the capacitive current determination, while a circled 3 indicates a time period, in which the dead time is long enough, so that no capacitive current compensation is necessary. Finally, a circled 4 indicates time periods in which the dead time is too short, making capacitive current compensation necessary.

Finally, in Fig. 6, an embodiment of the inventive method is shown in a flow diagram. In a first step 40, an operating state of the converter is determined. In a second step 41, capacitive current events are detected. In third step 42, a statistical analysis of an occurrence of capacitive current events is performed. In a final fourth step 43, an adjusting of a dead time of the half bridge to prevent capacitive current, based on the operating state of the converter and/or based on the statistical analysis of an occurrence of capacitive current events is selectively activated or deactivated.

It should be noted that either the step 40 or the steps 41 and 42 can be performed. It is also possible to perform both the steps 40 as well as the steps 41 and 42. It is not necessary to perform both the steps 40 as well as the steps 41 and 42, though.

It is important to note that all features of the different embodiments of the inventive converter are also to be understood as disclosed in conjunction with the inventive method.

The present invention is not limited to specific types of converters, especially to specific types of resonators. Also, the present invention is not limited to the use of only the three specified criteria for activating or deactivating the capacitive current compensation. A plurality of further factors might be used. The characteristics of the exemplary embodiments can be used in any combination.

## Claims

1. Converter (1) for supplying a load (4), e.g. a LED, comprising a half bridge (6),
**characterized in that**
the converter (1) comprises a capacitive current compensation circuit (10), configured to adjust a dead time of the half bridge (6), to prevent capacitive current,
the capacitive current compensation circuit (10) comprises a capacitive current compensation activation circuit (13), configured to selectively activate and deactivate the adjusting of the dead time of the half bridge (6) by the capacitive current compensation circuit (10), based on
- an operating state of the converter (1), and/or
- a statistical analysis of an occurrence of capacitive current events.

2. Converter (1) according to claim 1,
wherein the capacitive current compensation activation circuit (13) comprises a state determining circuit (12), configured to determine the operating state of the converter (1).

3. Converter (1) according to claim 2,
wherein the state determining circuit (12) is configured to determine
- a steady state operation state, if an output power of the converter (1) has changed by less than a power change threshold value for at least a steady state time period, and/or
- a load change operation state, if the output power of the converter (1) has changed by more than the power change threshold value within the steady state time period,
as the operating state of the converter (1).

4. Converter (1) according to claim 3,
wherein the capacitive current compensation activation circuit (13) is configured
- to deactivate the adjustment of the dead time of the half bridge (6) by the capacitive current compensation circuit (10), if the state determining circuit (12) has determined a steady state operation state, and
- to activate the adjustment of the dead time of the half bridge (6) by the capacitive current compensation circuit (10), if the state determining circuit (12) has determined a load change operation state.

5. Converter (1) according to any of the claims 2 to 4, wherein the state determining circuit (12) is configured to determine
- a high power operation state, if the output power of the converter (1) is above a power state threshold value, and/or
- a low power operation state, if the output power of the converter (1) is below a power state threshold value,
as the operating state of the converter (1).

6. Converter (1) according to claim 5,
wherein the capacitive current compensation activation circuit (13) is configured
- to deactivate the adjustment of the dead time of the half bridge (6) by the capacitive current compensation circuit (10), if the state determining circuit (12) has determined a low power operation state, and
- to activate the adjustment of the dead time of the half bridge (6) by the capacitive current compensation circuit (10), if the state determining circuit (12) has determined a high power operation state.

7. Converter (1) according to any of the claims 1 to 6, wherein the capacitive current compensation activation circuit (13) comprises an event analyzer (14), configured to perform the statistical analysis of an occurrence of capacitive current events.

8. Converter (1) according to claim 7,
wherein the event analyzer (14) is configured to determine
- if the occurrence of capacitive current events is statistically significant, or
- if the occurrence of capacitive current events is not statistically significant.

9. Converter (1) according to claim 8,
wherein the event analyzer (14) is configured to
- determine the occurrence of capacitive current events as statistically significant,
o if a capacitive current event is determined in at least L consecutive switching periods of the half bridge (6), and/or
o if a capacitive current event is determined in at least 1/M of N switching periods of the half bridge (6), and/or
- determine the occurrence of capacitive current events as not statistically significant,
o if a capacitive current event is determined in less than L consecutive switching periods of the half bridge (6), and/or
o if a capacitive current event is determined in less than 1/M of N switching periods of the half bridge (6).

10. Converter (1) according to claim 8 or 9,
wherein the capacitive current compensation activation circuit (13) is configured
- to activate the adjustment of the dead time of the half bridge (6) by the capacitive current compensation circuit (10), if the event analyzer (14) has determined the occurrence of capacitive current events as statistically significant, and
- to deactivate the adjustment of the dead time of the half bridge (6) by the capacitive current compensation circuit (10), if the event analyzer (14) has determined the occurrence of capacitive current events as not statistically significant.

11. Converter (1) according to any of the claims 1 to 10, wherein the capacitive current compensation circuit (10) is configured to adjust the dead time of the half bridge (6) by
- selectively switching the dead time between a base value and a fixed increased value, or
- dynamically adjusting dead time,
based on the occurrence of capacitive current events.

12. Converter (1) according to any of the claims 1 to 11, wherein the capacitive current compensation circuit (10) comprises a capacitive current determining circuit (9), configured to determine capacitive current events as switching cycles of the half bridge (6), in which a capacitive current occurs in the half bridge (6).

13. Converter (1) according to claim 12,
wherein the half bridge (6) comprises a first switching transistor (M₄₀) and a second switching transistor (M₄₁), wherein the capacitive current determining circuit (9) is configured to determine capacitive current events as switching cycles of the half bridge (6), in which a capacitive current through at least one of the first switching transistor (M₄₀) and the second switching transistor (M₄₁) occurs, and
wherein a capacitive current is a current flowing through one of the first switching transistor (M₄₀) and the second switching transistor (M₄₁), while a body diode of the other of the first switching transistor (M₄₀) and the second switching transistor (M₄₁) is conducting.

14. Converter (1) according to claim 13,
wherein the capacitive current determination circuit (9) comprises a mid point voltage measuring circuit (7), configured to measure a voltage at a mid point between the first switching transistor (M₄₀) and the second switching transistor (M₄₁), and
wherein the capacitive current determination circuit )9) is configured to determine the occurrence of a capacitive current event based on the mid point voltage measured by the mid point voltage measuring circuit (7).

15. Method for operating a converter for supplying a load (4),
**characterized by**
comprising the following steps:
- determining (40) an operating state of the converter (1), and/or
- determining (41) capacitive current events and performing (42) a statistical analysis of an occurrence of the capacitive current events,
- selectively activating or deactivating (43) an adjusting of a dead time of the half bridge (6), to prevent capacitive current, based on the operating state of the converter (1), and/or the statistical analysis of an occurrence of capacitive current events.
